# EUROPEAN PATENT SPECIFICATION

(11) **EP 2 338 195 B1**
(45) Date of publication and mention of the grant of the patent: **25.05.2016**
(21) Application number: 09743957.4
(22) Date of filing: 20.10.2009
(51) Int. Cl.: H01M 8/02, H01M 8/12, H01M 8/24

(54) **SOFC STACK WITH CORRUGATED SEPARATOR PLATE**
SOFC-STAPEL MIT GEWELLTER TRENNPLATTE
BLOC DE PILES À COMBUSTIBLE À OXYDE SOLIDE DOTÉ D UNE PLAQUE SÉPARATRICE STRIÉE

(30) Priority: 20.10.2008 NL 2002113
(43) Date of publication of application: 29.06.2011
(73) Proprietor: Instytut Energetyki, 01-330 Warszawa (PL)
(72) Inventor: DEKKER, Nicolaas Jacobus Joseph, NL-1051 PM Amsterdam (NL); JANSSEN, Arnoldus Hermannus Henderikus, NL-1705 DZ Heerhugowaard (NL)
(74) Representative: Nederlandsch Octrooibureau
(86) International application number: PCT/NL2009/050631
(87) International publication number: WO 2010/047586

(56) References cited:
- EP-A- 0 098 495
- WO-A-2004/049483
- JP-A- 2006 221 896
- JP-A- 2007 323 955
- US-A1- 2003 165 729

## Description

The present invention relates to an SOFC cell stack. *SOFC cell stacks are,* for example, known from patent NL1026861 or WO 2004/049483 A2.

Although such a cell *Stack* has advantages compared with what is known from the other prior art, there are limitations with regard to the capacity of such stacks.

It is an object of the present invention to increase the capacity of cell stacks and to simplify the cell stack.

Starting from a proper cell *comprising* anode, electrolyte and cathode, *a structure*, on the anode side, consisting of two slot plates is used therein to provide gas ducts for the anode gas when placing said slots on top of one another in a staggered manner.

With this known structure, a grid structure is used on the cathode side which consists of two plates comprising a current collector and a gas distribution element (expanded metal). In addition, use is made of an auxiliary plate in which slots are provided for laterally supplying cathode gases and openings for the vertical flow of anode gases.

Although this cell unit is satisfactory in principle, it has a number of drawbacks. First, the number of components is relatively large. Apart from resulting in an increase in the production costs, it also creates problems in respect of sealing, since each component has a tolerance and, if a number of components are stacked on top of one another, the total tolerance may become such that sealing is no longer simple.

It is an object of the present invention to provide a simplified cell unit by means of which it is possible to achieve an exceptionally high efficiency under conditions which can be controlled very well. In addition, it is an object of the invention to improve the number of electrical junctions and thus to improve the resistance of the cell stack. It is also intended to achieve improved gas distribution, in particular improved distribution of the anode gas and cathode gas. In addition, it is intended to produce a sealing which is of a simpler embodiment, thus reducing the risk of leaks, in particular in a cell stack.

This object is achieved by a cell *stack* having the features of Claim 1.

By means of the present invention, it is possible to arrange the anode and cathode opening in a perpendicular position with respect to one another, as a result of which the cross section of the opening for each of these openings can be made so large that this results in as small a flow resistance as possible, and an even distribution of gases is possible. Preferably, the flow of anode and cathode gas takes place in the same direction (co-flow), as a result of which the action of the cell is optimized. In addition, it is possible in this way to simplify the embodiment of the various sealings as much as possible and to limit the number of sealings and the length thereof, thus increasing the operational reliability.

According to the present invention, it is proposed as a first step to no longer embody the separator plates known from the prior art as flat, but to provide them with an undulation or corrugation. The space between the corrugations functions as a duct for either the anode gas or cathode gas. According to the present invention, this corrugation is realised in such a manner that it can bear directly against the anode or cathode. As a result thereof, a number of parts of the existing concept become redundant, i.e. the above-described two slot plates on the anode side and the expanded metal on the cathode side. This results in a much more compact cell unit which can be sealed more simply because the tolerances which the sealing has to accommodate are smaller. In addition, there are fewer electrical junctions, resulting in a higher performance of the cell unit.

In addition, by moving the anode gas supply duct to the side of the cell, the anode and cathode gas distribution across the cell is improved.

In this particular embodiment, anode gas and cathode gas (and the discharge thereof, respectively) are supplied to different sides of the substantially rectangular cell, but the flow follows this corrugation. More particularly, this displacement takes place in co-flow so that an optimum efficiency of the cell can be achieved. This means that the temperature distribution is optimized as well as the degree of depletion (uniform) of the (anode) gas used. As a result thereof, a high degree of conversion and thus a high efficiency can be achieved. The supply of cathode gas can (with small cell stacks) take place both via openings which are arranged in the separator plates and situated on top of one another and (with large cell stacks) by means of a supply/discharge situated outside the cell unit. In the latter case (with external manifolding), a particularly large amount of cathode gas can be passed across the cell, as a result of which the cathode gas not only has an electrochemical function, but also a cooling function. Cathode gas can be supplied in excess. The above-described cell may both be anode-supported and electrolyte-supported.

According to a particular embodiment of the present invention, the corrugation of the anode and/or cathode inlet duct and/or outlet duct extends and supports a sealing thereon. That is to say, the corrugation provides a large number of parallel ducts while, on the other hand, the packing is supported by the corrugation. If the cell stack is relatively large, this will result in problems with the sealing. It has been found that this is caused by the fact that the pressure on the respective packings is insufficient. This is caused by the fact that a packing does indeed work between two (sheet-metal) parts, but that a cavity which is defined by the structure is present under one of those parts for the supply and/or discharge of a gas. As a result thereof, the series of packings which are stacked one behind the other do not form a rigid unit as there is always an opening present and it is not possible to produce a sufficiently large packing pressure to provide a sealing without closing off the respective opening and/or ducts, as in WO 2004/049483 A. By contrast, according to the invention, each packing is supported in the direction of stacking by an underlying packing, as a result of which a sufficiently large packing pressure is achieved to ensure satisfactory sealing.

According to a further embodiment of the present invention, a current collector is avoided by arranging the cathode such that it bears directly against the separator plate. In this case, the plate in which the cell is accommodated (cathode gas supply plate) is preferably embodied as a flat plate, that is to say not provided with ducts. In this embodiment, the ducts which provide the connection between the cathode and the cathode inlet and/or outlet are arranged in the separator plate which, to this end, is provided with additional corrugation and is preferably produced by pressing. In addition, according to a further advantageous embodiment, the separator plate is provided with additional elevations for taking over the role of current collector.

The invention also relates to an SOFC cell stack in which a number of cell units are stacked on top of one another as described above and which comprise common separator plates.

The invention will be described below with reference to an exemplary embodiment which is illustrated in the drawing, in which:
Fig. 1 diagrammatically shows the various parts for forming a cell unit;
Fig. 2 shows a separator plate with cell and sealings in more detail;
Fig. 3 shows a top view of the cathode gas supply plate in detail;
Fig. 4 shows a bottom view of the cathode gas supply plate;
Fig. 5 shows a variant of the structure shown in the previous figures;
Fig. 6 shows a particular embodiment of the variant shown in Fig. 5,
Fig. 7 shows a further variant of the structure shown in Fig. 1,
Fig. 8 shows a detail from Fig. 7 and
Fig. 9 shows a further variant from Fig. 6.

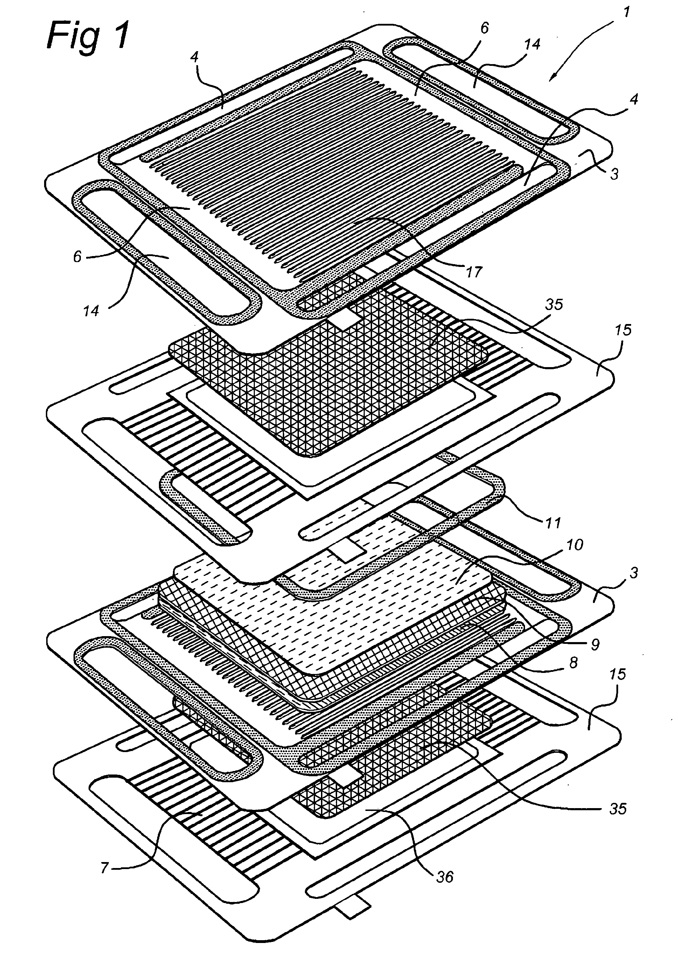

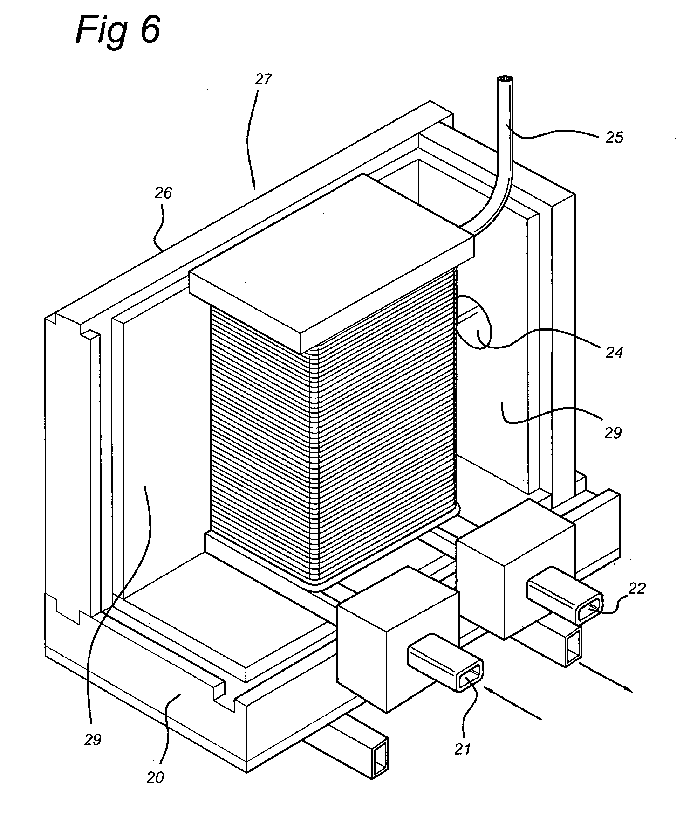

In Fig. 1, a cell unit is denoted overall by reference numeral 1. As is clear from Fig. 6, the latter is preferably combined with a large number of other cell units in order to thus form a cell stack.

The actual cell is formed by electrolyte 9 which is delimited on one side by anode 8 and delimited on the other side by cathode 10. According to the invention, separator plates 3 are present on either side of the actual cell unit, with the topmost separator plate 3 directly adjoining the cathode 10 and the bottommost separator plate 3 directly adjoining the anode 8. This means that there are no further components between the separator plate and the anode and cathode, respectively. If desired, a current collector plate 35 is present between the cathode 10 and the respective separator plate 3. The surface of the cathode 10 and more particularly the outer circumference thereof is smaller than that of the electrolyte 9 and/or anode 8. As a result thereof, a packing 11 can be arranged on the electrolyte 9, with the cathode 10 being enclosed thereby. If a current collector plate 35 is present, the latter is also enclosed by the sealing 11. This sealing 11 provides a gas sealing between the anode gas and the cathode gas.

In order to enable gas and electrons to be transported, the separator plate 3 according to the invention is designed in a particular way. In the embodiment shown in Figs. 1-4, the latter consists of a plate which is flat along the periphery and has a corrugation 17 in the centre thereof. The surface of the corrugation 17 corresponds to the surface of the anode. Because the surface of the cathode is smaller than that of the anode and the corrugation extends on both sides of the separator plate 3, the surface of the corrugation will be larger than that of the cathode. On the periphery of separator plate 3, there are anode gas supply/discharge openings 4 and at right angles thereto, i.e. in the direction in line with the corrugations 17, cathode gas supply/discharge openings 14. A cathode gas supply plate 15 is placed between two separator plates. It is provided with an internal opening 36 to enable a current collector 35 to be accommodated therein.

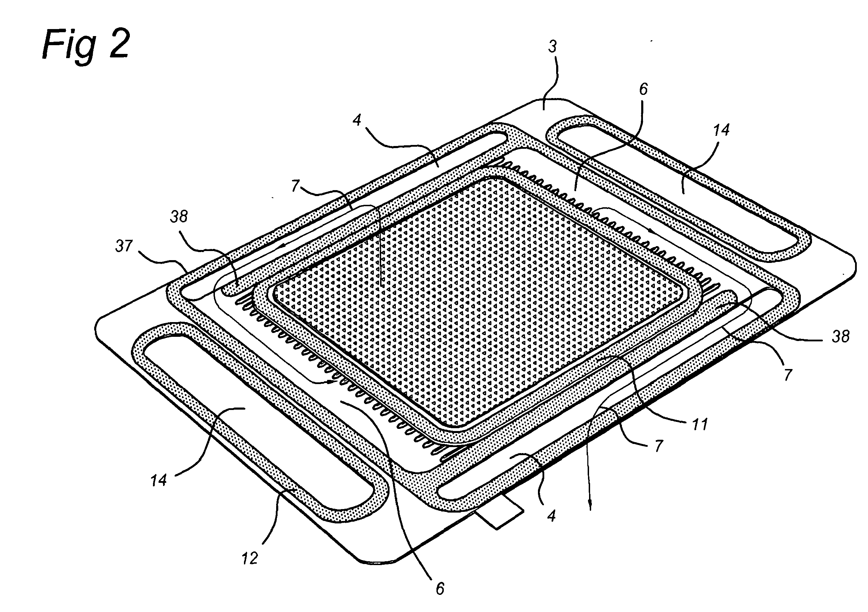

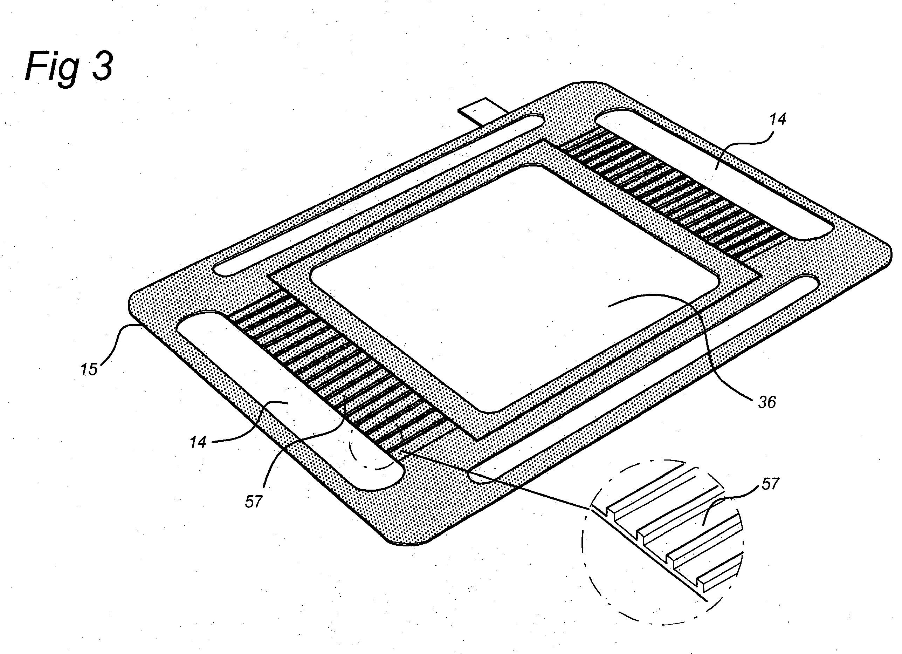

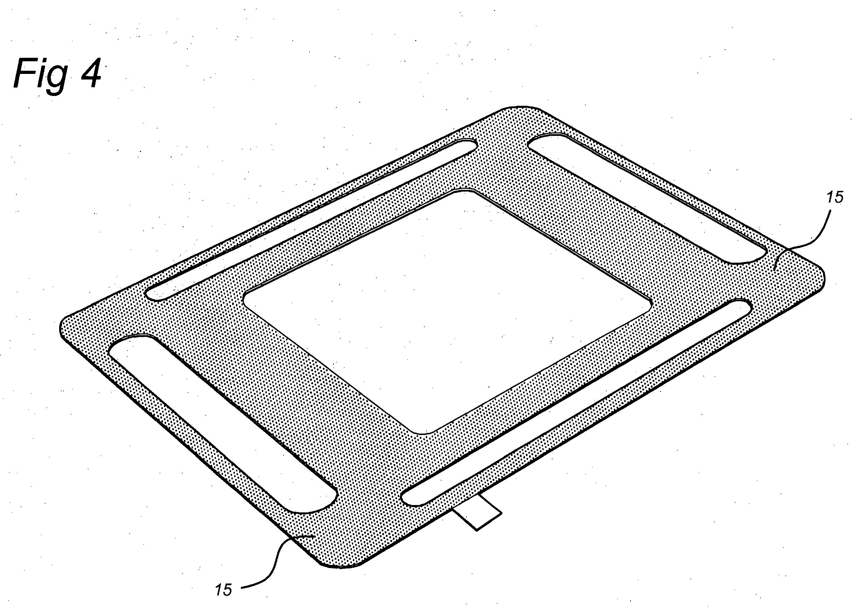

As can be seen in the top view from Fig. 3, it is provided with cathode gas ducts 57 on one side while, as can be seen in Fig. 4, the bottom side of this cathode gas supply plate 15 is of a flat design. As can be seen in Figs. 1 and 2, a number of sealings are present. Annular sealings 12 seal the cathode gas ducts 14. A further sealing 37 is present in order to seal the anode gas ducts 4. However, in order to make a flow of anode gas possible, an inner portion of this sealing, denoted by reference numeral 38, is designed to end in an unattached manner. Anode gas is transported in accordance with the arrows 7.

Due to the presence of a number of spaced-apart cathode gas ducts 57 and the webs situated in between, packing pressure which is transmitted from the ends to a cell stack is transferred to the next component of the cell stack via these webs which are situated between the ducts 57. As a result thereof, it is possible to ensure that there is in each case sufficient packing pressure on every packing and thus sealing across a relatively large cell stack.

A manifold 6 in each case adjoins the openings 4. This means that the anode gas is moved at right angles to the direction in which it is supplied by the above-described corrugations 57 along the anode side of the cell. As the separator plate 3 preferably is a metallic plate into which the corrugations are pressed, the corrugations substantially have the same position and the same direction (for example longitudinal direction) on both sides of the plate. It is possible to make the cross-sectional dimension of the cathode gas ducts slightly larger (for example 10-50% larger) than the cross-sectional dimension of the anode gas ducts by influencing the shape of the corrugation. This is due to the fact that the cathode gas can also have the function of a coolant gas in addition to its electrochemical function.

The cathode gas can move in the same direction as the anode gas. The used sealing material may be any material known from the prior art. According to an exemplary embodiment of the invention, a glass material, and more particularly a glass/ceramic material, is used for this purpose. If desired, combinations with mica are possible.

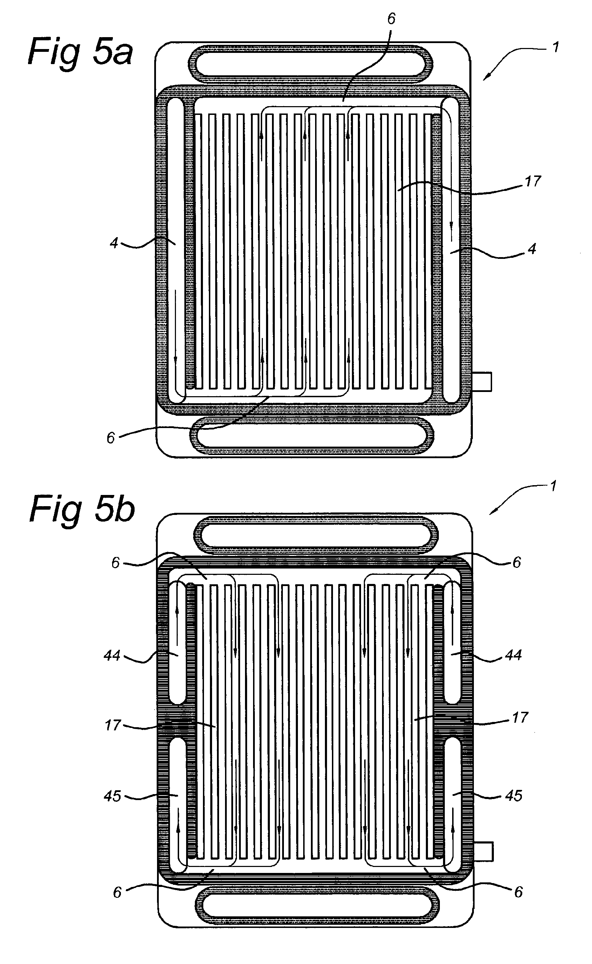

Fig. 5 diagrammatically shows a number of possibilities for the anode gas stream.

Fig. 5a shows the embodiment illustrated in Figs. 1-4 in which the anode gas flows across the entire width of the separator plate, distributed via a single manifold 6 through the corrugations 17 via a single opening 4, to a manifold 6 opposite and is discharged again via the associated opening 4.

Fig. 5b shows a variant in which the duct 4 is split into two ducts 44 and 45 with duct 44 being a supply duct and duct 45 being a discharge duct. In this embodiment, the gas is supplied and discharged symmetrically via manifold 6, as a result of which the uniform distribution of the anode gas across the cell may be improved.

With relatively large cell stacks, it is possible to perform the supply of cathode gas via an external manifold. In the case of such an embodiment, the cathode gas openings 14 shown in the previous figures are no longer incorporated in the separator plate 3. This means, for example with the embodiment as illustrated in Fig. 1, that the outer boundary of the separator plate is formed by the outer boundary of the sealing 37. As a result thereof, a particularly compact cell unit can be produced, in which the cathode gas is supplied via an external manifold. Such a variant can also be used with the flow illustrated in Fig. 5b. This is shown by way of example in Fig. 6. In this case, a sealing is present on the anode side between the bottommost cell unit and the anode gas supply opening 21 and the anode gas discharge opening 22. On the cathode side, the corrugations are open to the environment via ducts 57 (see Fig. 1).

A large number of cell units is stacked on top of one another and forms a cell stack 27. The cathode gases are supplied by means of a closed cabinet 26. The cell stack 27 divides this cabinet into a cathode gas supply distribution space 29 and a cathode gas discharge distribution space 29 with the latter space being provided with a discharge opening 24. Anode gas is supplied via opening 21 and discharged via opening 22. These openings end in openings 4 as described above. The embodiment from Fig. 6 has the advantage that large amounts of cathode gas (air) can be fed through in a simple manner, so that this can have a cooling function.

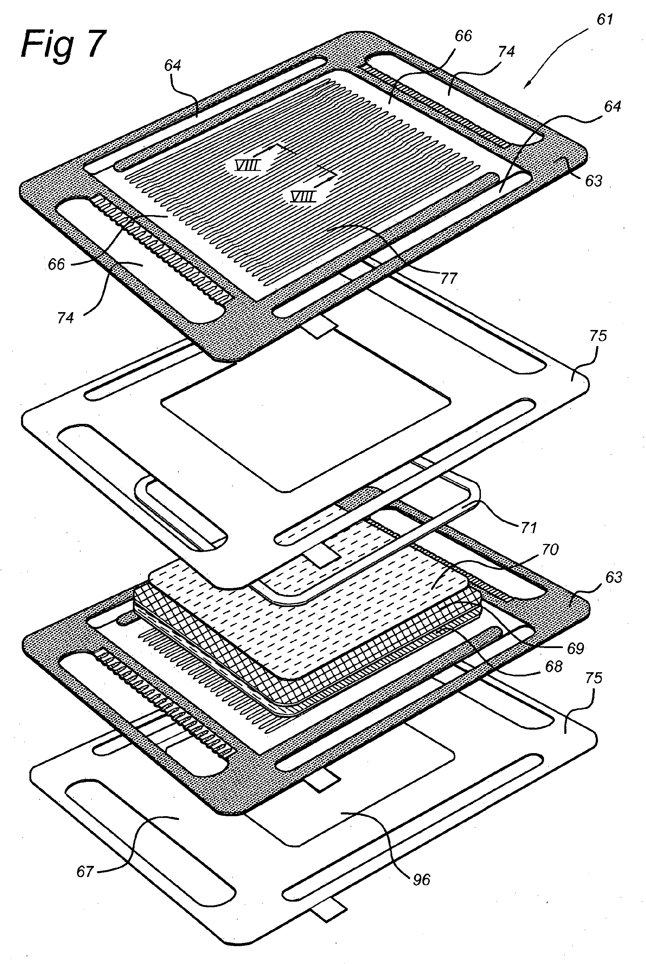

Fig. 7 shows a further variant of the present invention. In as far as applicable, the reference numerals used in the latter correspond to those used in Fig. 1 except that they have been increased by 60. This means that the cell unit is denoted overall by reference numeral 61, with the actual cell being formed by electrolyte 69 which is delimited on one side by an anode 68 and on the other side by a cathode 70. In this variant, plates 63 and 75 are embodied differently. Here, plate 75 is a smooth plate, that is to say that the ducts illustrated in Fig. 3 are not present therein. Neither is there a current collector present in this embodiment.

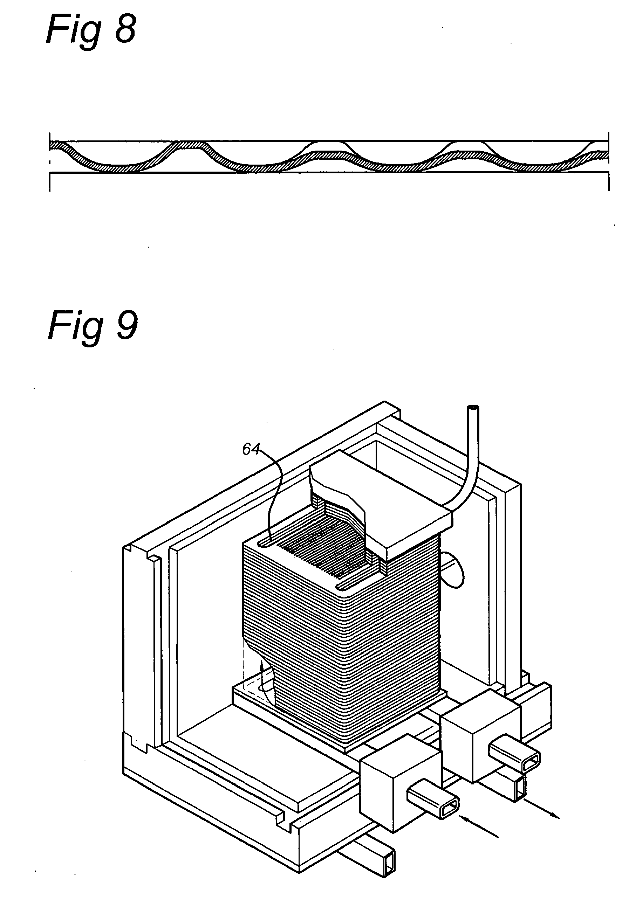

In order to enable gas to be transported, plate 63 is provided with a ribbing or corrugation 77. On the top side illustrated, the latter is sealed by the packings and on the bottom side this function is performed by the ducts 57 which have been illustrated in Fig. 3. In addition, the corrugation 77 is provided with a local elevation at the location of the cathode, as can be seen in the illustrated detail from Fig. 8, as a result of which no separate current collector is required.

Fig. 9 shows a cell stack with external manifolding, in which a part is broken away at the top side to show that, compared to Fig. 7, ducts 64 are present and ducts 74 are not.

Upon reading the above, those skilled in the art will immediately be able to think of variants which fall within the scope of the attached claims and are obvious following reading of the above.

## Claims

1. SOFC cell stack comprising cell units (1) of rectangular design, a cell unit comprising an anode (8), an electrolyte (9) and a cathode (10), the stack further comprising separator plates (3) which are common to adjacent cell units, a separator plate (3) comprising a corrugation (17) in the central section thereof, wherein openings in and sealings on the separator plate provide an anode gas inlet and an anode gas outlet at opposite sides of the unit, and a cathode gas inlet and a cathode gas outlet at sides of the unit which are different from the sides where the anode gas inlet and outlet are provided, wherein said corrugation comprises an undulating pattern which extends from the centre of the separator plate to both sides of the separator plate, the ducts of said corrugation serving to transport anode gas and cathode gas along the cathode and anode, respectively, wherein said corrugation is bearing directly against the anode and wherein the anode gas inlet, the cathode gas inlet and the corrugation are arranged in such a manner that a co-flow of anode and cathode gases is achieved.

2. Cell stack according to Claim 1, wherein both the anode and the cathode bear directly against the corrugation.

3. Cell stack according to Claim 1, wherein a current collector (35) is arranged between the cathode and the corrugation.

4. Cell stack according to one of the preceding claims, wherein the cathode gas inlet and cathode gas outlet (29) are separate from the cell unit.

5. Cell stack according to one of the preceding claims, wherein the cross-sectional dimension of the cathode gas ducts delimited by the corrugation is at least 10% larger for the cathode gas ducts than the cross-sectional dimension of the anode gas ducts.

6. Cell stack according to one of the preceding claims, wherein the cell unit comprises a sealing (11) which acts between the cathode (8) and the separator plate (3).

7. Cell stack according to one of the preceding claims, comprising a gas supply plate (15) arranged between two separator plates (3) and accommodating the anode, electrolyte and the cathode therein.

8. Cell stack according to claim 7, wherein the cell unit comprises a sealing (37) which only acts between the separator plate (3) and the cathode gas supply plate (15).

9. Cell stack according to one of the preceding claims, accommodated in a housing (27) provided with a cathode gas supply manifold (29) and a cathode gas discharge manifold (29).

## Patentansprüche

1. SOFC Zellenstapel, wobei der Zellenstapel Zelleneinheiten (1) in rechteckiger Ausgestaltung aufweist, wobei eine Zelleneinheit eine Anode (8) ein Elektrolyt (9) und eine Kathode (10) aufweist, wobei der Stapel ferner Trennplatten (3) aufweist, die gemeinsam für angrenzende Zelleinheiten sind, wobei eine Trennplatte (3) in ihrem mittleren Abschnitt eine Wellenstruktur (17) aufweist, wobei Öffnungen in und Dichtungen auf der Trennplatte einen Anodengaseinlass und einen Anodengasauslass auf gegenüberliegenden Seiten der Einheit bereitstellen, und wobei ein Kathodengaseinlass und ein Kathodengasauslass an Seiten der Einheit bereitgestellt werden, die unterschiedlich zu den Seiten sind, an denen der Anodengaseinlass und der Anodengasauslass bereitgestellt werden, wobei die Wellenstruktur ein Wellenmuster aufweist, das sich von der Mitte der Trennplate zu beiden Seiten der Trennplatte erstreckt, wobei die Durchlässe der Wellenstruktur dazu dienen das Anodengas und das Kathodengas entlang der Kathode und der Anode entsprechend zu transportieren, wobei sich die Wellenstruktur direkt an die Anode stützt und wobei der Anodengaseinlass, der Kathodengaseinlass und die Wellenstruktur derart angeordnet sind, dass eine parallele Strömung von Anoden- und Kathodengas erreicht wird.

2. Zellenstapel nach Anspruch 1, wobei sich sowohl die Anode als auch die Kathode direkt an die Wellenstruktur stützen.

3. Zellenstapel nach Anspruch 1, wobei ein Stromabnehmer (35) zwischen der Kathode und der Wellenstruktur angeordnet ist.

4. Zellenstapel nach einem der vorhergehenden Ansprüche, wobei der Kathodengaseinlass und der Kathodengasauslass (29) unterschiedlich zu der Zelleneinheit sind.

5. Zellenstapel nach einem der vorhergehenden Ansprüche, wobei die Querschnittsabmessung der Kathodengasdurchlässe, die durch die Wellenstruktur begrenzt ist, für die Kathodengasdurchlässe wenigstens 10% größer ist als die Querschnittsabmessung der Anodengasdurchlässe.

6. Zellenstapel nach einem der vorhergehenden Ansprüche, wobei die Zelleneinheit eine Dichtung (11) aufweist, die zwischen der Kathode (8) und der Trennplatte (3) agiert.

7. Zellenstapel nach einem der vorhergehenden Ansprüche, wobei der Zellenstapel eine Gaszufuhrplatte (15) aufweist, die zwischen zwei Trennplatten (3) angeordnet ist und die die Anode, das Elektrolyt und die Kathode darin aufnimmt.

8. Zellenstapel nach Anspruch 7, wobei die Zelleneinheit eine Dichtung (37) aufweist, die nur zwischen der Trennplatte (3) und der Kathodengaszufuhrplatte (15) agiert.

9. Zellenstapel nach einem der vorhergehenden Ansprüche, wobei der Zellenstapel in einem Gehäuse (27) aufgenommen ist, das mit einem Kathodengaszufuhrsammelleitung (29) und einem Kathodengasaustrittssammelleitung (29) ausgestattet ist.

## Revendications

1. Bloc de piles à combustible à oxyde solide (SOFC) comprenant des unités de pile (1) de conception rectangulaire, une unité de pile comprenant une anode (8), un électrolyte (9) et une cathode (10), le bloc comprenant en outre des plaques séparatrices (3) qui sont communes à des unités de pile adjacentes, une plaque séparatrice (3) comprenant une striure (17) située dans sa section centrale, dans lequel des ouvertures pratiquées dans, et des scellements prévus sur la plaque séparatrice fournissent une entrée de gaz anodique et une sortie de gaz anodique, sur des côtés opposés de l'unité, et une entrée de gaz cathodique et une sortie de gaz cathodique sur des côtés de l'unité qui sont différents des côtés où sont situées les entrée et sortie de gaz anodique, dans lequel ladite striure comprend un motif ondulé qui s'étend depuis le centre de la plaque séparatrice jusqu'aux deux côtés de la plaque séparatrice, les conduits de ladite striure servant à transporter le gaz anodique et le gaz cathodique le long de la cathode et de l'anode, respectivement, dans lequel ladite striure porte directement contre l'anode et dans lequel l'entrée de gaz anodique, l'entrée de gaz cathodique et la striure sont agencées de telle manière qu'un écoulement conjoint des gaz anodique et gaz cathodique est obtenu.

2. Bloc de piles à combustible selon la revendication 1, dans lequel l'anode et la cathode portent toutes les deux directement contre la striure.

3. Bloc de piles à combustible selon la revendication 1, dans lequel un collecteur de courant (35) est agencé entre la cathode et la striure.

4. Bloc de piles à combustible selon l'une des revendications précédentes, dans lequel l'entrée de gaz cathodique et la sortie de gaz cathodique (29) sont séparées de l'unité de pile.

5. Bloc de piles à combustible selon l'une des revendications précédentes, dans lequel la dimension transversale des conduits de gaz cathodique délimités par la striure est au moins 10 % plus importante pour les conduits de gaz cathodique que la dimension transversale des conduits de gaz anodique.

6. Bloc de piles à combustible selon l'une des revendications précédentes, dans lequel l'unité de pile comprend un scellement (11) qui agit entre la cathode (8) et la plaque séparatrice (3).

7. Bloc de piles à combustible selon l'une des revendications précédentes, comprenant une plaque d'alimentation en gaz cathodique (15) agencée entre deux plaques séparatrices (3) et recevant l'anode, l'électrolyte et la cathode en son sein.

8. Bloc de piles à combustible selon la revendication 7, dans lequel l'unité de pile comprend un scellement (37) qui agit uniquement entre la plaque séparatrice (3) et la plaque d'alimentation en gaz cathodique (15).

9. Bloc de piles à combustible selon l'une des revendications précédentes, reçu dans un logement (27) muni d'un collecteur d'alimentation en gaz cathodique (29) et un collecteur d'évacuation de gaz cathodique (29).
